# EUROPEAN PATENT APPLICATION

(11) **EP 2 336 260 A1**
(43) Date of publication of application: **22.06.2011**
(21) Application number: 09819201.6
(22) Date of filing: 06.10.2009
(51) Int. Cl.: C09J 7/02, B32B 27/36, C08G 18/40, C08G 18/83, C09J 167/00, C09J 169/00, C09J 171/00, C09J 175/04, C09J 175/06, C09J 175/08, C09J 201/10

(54) **ADHESIVE LAMINATE**

(30) Priority: 08.10.2008 JP 2008261780; 10.03.2009 JP 2009057005
(71) Applicant: Asahi Glass Company, Limited, Tokyo 100-8405 (JP)
(72) Inventor: YASUDA, Teruhiko, Tokyo 100-8405 (JP); SHIMOMA, Hitoshi, Tokyo 100-8405 (JP); SATO, Hisashi, Tokyo 100-8405 (JP)
(74) Representative: Hartz, Nikolai
(86) International application number: PCT/JP2009/067429
(87) International publication number: WO 2010/041667

(57) **Abstract**

To provide an adhesive laminate with which an adhesive deposit does not result even when a polyester-type substrate layer is used.

An adhesive laminate comprising a polyester-type substrate layer and an adherence substance layer, wherein one surface of the polyester-type substrate layer is a treated surface subjected to adhesion-facilitating treatment, the adherence substance layer is in contact with the treated surface, and the adherence substance layer is a layer obtained by curing a curable composition containing the following silyl group-containing polymer (S). The silyl group-containing polymer (S) is a silyl group-containing polymer having a polyether chain, a polyester chain and/or a polycarbonate chain in its main chain and having a hydrolyzable silyl group at its molecular terminal.

## Description

### TECHNICAL FIELD

The present invention relates to an adhesive laminate.

### BACKGROUND ART

An adhesive laminate having a substrate layer and an adherence substance layer has been used in the form of a pressure sensitive adhesive sheet or a pressure sensitive adhesive tape. The adhesive laminate is required to adhere to an adherend with a desired force at the time of use. At the same time, the adhesive laminate is required to have removability so that it can be peeled without leaving an adhesive deposit.

That is, between the substrate layer and the adherend which are in contact with the adherence substance layer, the adherence substance layer is required to be necessarily integral with the substrate layer.

As the substrate which supports the adherence substance layer, a polyester-type material is suitably adopted. That is because a polyester-type material is excellent in mechanical strength, chemical resistance and insulation property, as well as relatively inexpensive, whereby a balance between performance and cost is achieved. However, it is known that there has been a problem such that since a polyester-type material usually has a poor affinity to an adherence substance, when a pressure sensitive adhesive tape is rewound, the adherence substance transfers to the back side of the tape of the next layer in some cases. For example, with a combination of a polyester-type substrate and an acrylic-type adherence substance layer, the affinity between the substrate layer and the adherence substance layer is poor, and in some cases a so-called adhesive deposit results, where the adherence substance layer remains on the adherend at the time of peeling. In order to solve this problem, it has been proposed, for example, to provide a primer layer composed of multi-components between the substrate layer and the adherence substance layer (Patent document 1).
Patent Document 1: JP A 2004-217825

### DISCLOSURE OF THE INVENTION

### OBJECT TO BE ACCOMPLISHED BY THE INVENTION

The object of the present invention is to provide an adhesive laminate with which an adhesive deposit does not result even when a polyester-type substrate layer is used.

### MEANS TO ACCOMPLISH THE OBJECT

The present invention provides the following.
[1] An adhesive laminate comprising a polyester-type substrate layer and an adherence substance layer, wherein one side of the polyester-type substrate layer is a treated surface subjected to adhesion-facilitating treatment, the adherence substance layer is in contact with the treated surface, and the adherence substance layer is a layer obtained by curing a curable composition containing the following silyl group-containing polymer (S):
   Silyl group-containing polymer (S): a silyl group-containing polymer having a polyether chain, a polyester chain and/or a polycarbonate chain in its main chain and having a hydrolyzable silyl group at its molecular terminal.
[2] The adhesive laminate according to the above [1], wherein the silyl group-containing polymer (S) is a silyl group-containing polymer (S1) obtained by introducing a hydrolyzable silyl group to a terminal of at least one polyol compound selected from the group consisting of a polyether polyol, a polyester polyol, a polycarbonate polyol and a polyether polyester polyol.
[3] The adhesive laminate according to the above [1], wherein the silyl group-containing polymer (S) is a silyl group-containing polymer (S2) obtained by introducing a hydrolyzable silyl group to a terminal of a polyurethane prepolymer obtained by reacting at least one polyol compound selected from the group consisting of a polyether polyol, a polyester polyol, a polycarbonate polyol and a polyether polyester polyol with a polyisocyanate compound.
[4] The adhesive laminate according to the above [1], wherein the silyl group-containing polymer (S) is a silyl group-containing polymer (S3) obtained by introducing a hydrolyzable silyl group to a molecular terminal of a polyurethane polymer obtained by reacting at least one polyol compound selected from the group consisting of a polyether polyol, a polyester polyol, a polycarbonate polyol and a polyether polyester polyol with a polyisocyanate compound to obtain a polyurethane prepolymer, and further subjecting the polyurethane prepolymer to a chain-extending reaction by using a chain extending agent.
[5] The adhesive laminate according to any one of the above [1] to [4], wherein the hydrolyzable silyl group of the silyl group-containing polymer (S) is introduced by using at least one silane compound selected from the group consisting of an isocyanate silane, an aminosilane, a mercaptosilane, an epoxysilane and a hydrosilane.
[6] The adhesive laminate according to any one of the above [1] to [5], wherein the hydrolyzable silyl group is a trialkoxysilyl group.
[7] The adhesive laminate according to any one of the above [1] to [6], which has a peel adhesive strength of at most 8 N/25mm.
[8] The adhesive laminate according to any one of the above [1] to [7], wherein the other side of the polyester-type substrate layer is an untreated substrate surface which is not subjected to adhesion-facilitating treatment.
[9] The adhesive laminate according to any one of the above [1] to [8], wherein the adhesion-facilitating treatment is a single treatment or a combination of two or more treatments selected from the group consisting of plasma treatment, corona discharge treatment, flame treatment, ultraviolet ray treatment, primer treatment and blast treatment.

### EFFECTS OF THE INVENTION

According to the present invention, it is possible to provide an adhesive laminate comprising a polyester-type substrate layer and an adherence substance layer, wherein formation of an adhesive deposit is prevented.

### BEST MODE FOR CARRYING OUT THE INVENTION

In this specification, the number average molecular weight (Mn) and the mass average molecular weight (Mw) are the molecular weights as calculated as polystyrene obtained by measurement by gel permeation chromatography employing a calibration curve prepared by using a standard polystyrene test sample having a known molecular weight.

In this specification, the average hydroxy value (OHV) is a value measured in accordance with JIS K-1557-6.4.

Further, in this specification, a polyether polyester polyol is a polyol having an ether bond and an ester bond.

Further, in this specification, an adherence property is a property to adhere to an adherend under gentle pressure and to be optionally removable. Further, a pressure sensitive adhesive is a material which has the adherence property and adheres to an adherend under gentle pressure. Further, it has removability and is used for temporary adhesion. On the other hand, an adhesive is different from a pressure sensitive adhesive in that it has a permanent adhesive property.

In this specification, pressure sensitive adhesives may sometimes be classified by the peel adhesive strength (peel strength from the adherend). A case where the peel adhesive strength exceeds 0 N/25 mm and is at most 1 N/25 mm may be referred to as "weakly adhesive"; a case where the peel adhesive strength exceeds 1 N/25 mm and is at most 8 N/25 mm as "low adhesive"; a case where the peel adhesive strength exceeds 8 N/25 mm and is at most 15 N/25 mm as "moderately adhesive"; and a case where the peel adhesive strength exceeds 15 N/25 mm and is at most 50 N/25 mm as "strongly adhesive". Unless otherwise specified, the peel adhesive strength is in accordance with the following test method in accordance with the 180° peeling method as defined in JIS Z-0237(1999)-8.3.1.

That is, in an environment of 23°C, a pressure sensitive sheet test piece to be measured (width: 25 mm) is adhered to a stainless steel plate (SUS 304(JIS)) having a thickness of 1.5 mm and treated by bright annealing, and press-bonded by a rubber roll having a weight of 2 kg. 30 minutes later, the peel strength (180° peeling, pulling speed: 300 mm/min) is measured by means of a tensile tester as defined in JIS B-7721. The value, thus obtained, of the peel strength after 30 minutes from adhesion is taken as the "peel adhesive strength" in the present invention.

### <ADHESIVE LAMINATE>

The adhesive laminate of the present invention comprises a polyester-type substrate layer (which may be simply referred to as a substrate) and an adherence substance layer (which may be simply referred to as an adherence substance) provided on the polyester-type substrate layer. The adhesive laminate may be in any shapes, but it is preferably in the shape of a pressure sensitive adhesive sheet or a pressure sensitive adhesive tape. An adherence substance is a formed product having an adherence property. A pressure sensitive adhesive sheet is a sheet having an adherence property. However, in this specification, the thickness is not questioned, i.e. a sheet and a film are not distinguished. The pressure sensitive adhesive sheet is a laminate having a substrate layer and an adherence substance layer as constituting elements. Further, a pressure sensitive adhesive tape is a pressure sensitive sheet in the form of a tape, and a tape means a shape having enough length against the width.

### <POLYESTER-TYPE SUBSTRATE LAYER>

The polyester-type substrate layer in the present invention is a substrate layer composed of a polyester-type material. The substrate layer has a function to support the adherence substance layer mechanically. The form of the substrate layer is not particularly limited. For example, the form may be a film, woven fabric or nonwoven fabric. Among them, the form of a film is preferred because it is excellent in processability of the adhesive laminate. In the case of woven fabric or nonwoven fabric, it may be composed only of a polyester-type material, or it may be a complex with other materials. Further, the substrate layer may be a single layer or a multilayer. In the case of a multilayer, various functional layers may be provided. The functional layer may, for example, be a conductive layer or an antireflection layer.

The polyester-type material may, for example, be polyethylene terephthalate (PET), polybutylene terephthalate (PBT), polyethylene naphthalate (PEN) or polybutylene naphthalate (PBN). Such a resin may contain another copolymerizable component, and further it may be a mixture with another resin. Further, the polyester-type material may contain various additives. Such an additive may, for example, be an antistatic agent, an ultraviolet absorbing agent or a stabilizer.

The thickness of the polyester-type substrate is not particularly limited, and it is suitably selected in accordance with the intended use. The thickness of a substrate supporting the adherence substance layer is preferably from 5 to 300 µm, more preferably from 10 to 150 µm.

### <ADHESION-FACILITATING TREATMENT>

The adherence substance layer is formed by applying a curable composition to a substrate and curing the curable composition. In order to prevent an adhesive deposit to an adherend well, it is preferred that the substrate and the adherence substance layer are sufficiently adhered. In the present invention, the surface at the side of the adherence substance layer of the polyester-type substrate layer is subjected to adhesion-facilitating treatment. That is, as to the polyester-type substrate, the surface to be coated by an adherence substance layer is preliminarily subjected to adhesion-facilitating treatment to be a treated surface. The adhesion-facilitating treatment is a treatment to improve the adhesion strength between a substrate and an adherence substance. An adhesive deposit can be prevented by this treatment.

The adhesion-facilitating treatment in the present invention may, for example, be plasma treatment, corona discharge treatment, flame treatment, ultraviolet ray treatment, primer treatment or blast treatment. Such a treatment may be a single treatment or a combination of two or more of the above treatments. Among them, plasma treatment, corona discharge treatment or primer treatment is preferred because the burden to the substrate layer is small, the treatment itself is easy, it is possible to improve the adhesion strength between the substrate and the adherence substance uniformly and homogeneously, and it has little influence on the optical properties of the adhesive laminate. Further, in the case where the adhesive laminate may be nontransparent, blast treatment is also effective.

As an example of a combination of two or more treatments, a combination of corona discharge treatment with primer treatment is preferred.

The plasma treatment is a method to modify a substrate surface by exciting a gas by using a high-frequency power source to put the gas into a plasma state where the reactivity is high and modifying the substrate surface by the gas in a plasma state.

The corona discharge treatment is a method to modify a substrate surface by applying a high alternating-current voltage between electrodes under atmospheric pressure to excite a corona discharge and exposing the substrate surface to the corona discharge.

The flame treatment is a method to modify a substrate surface by using a flame.

The ultraviolet ray treatment is a method to modify a substrate surface by exposing the substrate to ultraviolet rays (particularly far-ultraviolet rays having a wavelength of from 180 to 250 nm).

The blast treatment is a method to modify a substrate surface by letting a grinding material in the form of fine-particles collide with the substrate surface.

In any of these cases, the energy amount given to the substrate surface is suitably adjusted in accordance with the state of the substrate.

The primer treatment is a method to form a primer layer by applying a primer to a substrate surface. The primer is preferably, for example, a silane-type primer, an isocyanate-type primer, a urethane-type primer, a polyester resin-type primer, a rubber-type primer or an acrylic urethane-type primer.

As the silane-type primer, a silane coupling agent having a hydrolyzable group is preferred.

As a specific silane coupling agent having a hydrolyzable group, an isocyanate silane, an aminosilane, a mercaptosilane or an epoxysilane is preferred, and an aminosilane or an epoxysilane is particularly preferred. Such a silane may preferably, for example, be a compound which will be specifically exemplified below in the sections of methods (PQ1) to (PQ4) for introducing a hydrolyzable silyl group.

The isocyanate-type primer is preferably, for example, a polyfunctional polyisocyanate such as a modified product of a known polyisocyanate compound. The modified product may, for example, be a trimethylolpropane adduct-type modified product, a biuret-type modified product or an isocyanurate-type modified product. Specific examples include DURANATE P301-75E (manufactured by Asahi Kasei Corporation, trimethylolpropane adduct-type HDI (hexamethylene diisocyanate), isocyanate group content: 12.9 mass%, solid content: 75 mass%) and CORONATE L (manufactured by Nippon Polyurethane Industry Co., Ltd., trimethylolpropane adduct-type TDI (trilenediisocyanate), isocyanate group content: 13.5 mass%, solid content: 75 mass%).

As the urethane-type primer, an isocyanate group-terminated urethane prepolymer or a hydroxy group-terminated urethane prepolymer may be used. The hydroxy group-terminated urethane prepolymer may, for example, be MP2000 (manufactured by CEMEDINE Co., Ltd.).

The polyester resin-type primer is preferably one using a polyester resin having a molecular weight of from 5,000 to 20,000 as the main component. Specific examples include a solvent-type polyester resin-type primer, a hot-melt-type polyester resin-type primer and a water dispersion-type polyester resin-type primer. These are available as commercial products, and the representative examples include POLYESTER series (POLYESTER TP, POLYESTER LP, POLYESTER SP and POLYESTER WR (as product names)) manufactured by The Nippon Synthetic Chemical Industry Co., Ltd.

Among the polyester resin-type primers, an amorphous polyester resin is preferred and a solvent soluble one is preferred. Specifically, for example, a solvent type "Polyester TP-235 (product name)" using an amorphous polyester resin having a glass transition temperature of 65°C is preferred because it is excellent in adhesion to the polyester-type substrate layer.

The rubber-type primer may, for example, be No. 40 (product name) manufactured by The Yokohama Rubber Co., Ltd. as a solvent type synthetic rubber-type primer.

The acrylic urethane-type primer may, for example, be 8UA-347 (product name) manufactured by Taisei Fine Chemical Co., Ltd. as a solvent-type acrylic urethane carbonate resin.

The primer is particularly preferably a polyester resin-type primer, a rubber-type primer or an acrylic urethane-type primer because it is good in adhesion between the primer layer and the polyester-type substrate layer, transparency and methanol resistance and excellent in handling of the adhesive laminate. At the time of application of the primer, various types of additives may be added. For example, an electrical conductivity-imparting agent may be added. When a primer layer is formed on a substrate surface, the treated surface of the substrate becomes the surface of the primer layer.

### <SILYL GROUP-CONTAINING POLYMER (S)>

The adherence substance of the present invention is obtained by curing a curable composition containing a silyl group-containing polymer (S).

The silyl group-containing polymer (S) has a polyether chain, a polyester chain and/or a polycarbonate chain in its main chain and has a hydrolyzable silyl group at its molecular terminal.

It is preferred that as the silyl group-containing polymer (S), only one member of the following (S1) to (S3) or two or more of them in combination are used. Among them, (S1) is particularly preferred because the cured product to be obtained is excellent in flexibility and wettability.

### <SILYL GROUP-CONTAINING POLYMER (S1)>

The silyl group-containing polymer (S1) is obtained by introducing a hydrolyzable silyl group to a terminal of at least one polyol compound selected from the group consisting of a polyether polyol, a polyester polyol, a polycarbonate polyol and a polyether polyester polyol.

The polyether polyol in the present invention is a polyol having a polyether chain (-OR¹ -)_{n 1} [wherein R¹ is a C₂₋₄ alkylene group, and n1 is an integer of from 1 to 1,000] and having no polyester chain.

The polyester polyol is a polyol having a polyester chain (-OC(O)-R² -)ₙ₂ [wherein R² is a C₂₋₈ alkylene group, and n2 is an integer of from 1 to 1,000] and having no polyether chain.

The polycarbonate polyol is a polyol having a polycarbonate chain (-OC(O)-OR³-)_{n 3} [wherein R³ is a C₂₋₂₀ alkylene group, and n3 is an integer of from 1 to 1,000] and having no polyether chain and no polyester chain.

The polyether polyester polyol is a polyol having both a polyether chain and a polyester chain.

The silyl group-containing polymer (S1) is particularly preferably one obtained by introducing a hydrolyzable silyl group to the above polyol compound by the method described in any one of hereinafter-described (PQ1) to (PQ5).

### <SILYL GROUP-CONTAINING POLYMER (S2)>

The silyl group-containing polymer (S2) is obtained by introducing a hydrolyzable silyl group to a terminal of a polyurethane prepolymer obtained by reacting at least one polyol compound selected from the group consisting of a polyether polyol, a polyester polyol, a polycarbonate polyol and a polyether polyester polyol with a polyisocyanate compound.

The silyl group-containing polymer (S2) is particularly preferably one obtained by introducing a hydrolyzable silyl group to a polyurethane prepolymer by the method described in any one of hereinafter-described (PQ1) to (PQ5).

### <SILYL GROUP-CONTAINING POLYMER (S3)>

The silyl group-containing polymer (S3) is obtained by introducing a hydrolyzable silyl group to a molecular terminal of a polyurethane polymer obtained by reacting at least one polyol compound selected from the group consisting of a polyether polyol, a polyester polyol, a polycarbonate polyol and a polyether polyester polyol with a polyisocyanate compound to obtain a polyurethane prepolymer, and further subjecting the polyurethane prepolymer to a chain-extending reaction by using a chain extending agent.

The silyl group-containing polymer (S3) is particularly preferably one obtained by introducing a hydrolyzable silyl group to a polyurethane polymer by the method described in any one of hereinafter-described (PQ1) to (PQ5).

### <POLYOL COMPOUND>

As the polyol compound in the present invention, a polyether polyol, a polyester polyol, a polycarbonate polyol or a polyether polyester polyol may be used. As the polyol compound, one type of these polyols may be used singly, or two or more types of them may be used in combination. It is particularly preferred to use at least one polyol having a polyether framework (polyether chain) from the viewpoint of ensuring flexibility of the adherence substance. It is considered that the flexibility of an adherence substance has an effect to suppress so-called zipping, which is a phenomenon such that when an adherence substance is peeled from an adherend, it is not smoothly peeled and peeling sound is emitted. Further, by the polyol having a polyether framework, it is possible to lower the viscosity of the curable composition. Further, by the polyol compound having a polyether framework, it is possible to lower the surface resistance of the adherence substance and to suppress the peel electrostatic charge.

When the silyl group-containing polymer (S) has a polyether chain, an oxyethylene group may be contained as its part. It is because when an oxyethylene group is contained, it is possible to reduce the surface resistance particularly. In a case where an oxyethylene group is contained, the proportion of the oxyethylene groups is preferably from 5 to 70 mass%, more preferably from 10 to 50 mass%, in the all polyether chains. The oxyethylene groups may present in a polyether chain as a block or in a random manner.

The proportion of ether bonds (-OR¹ -) in the silyl group-containing polymer (S) is preferably from 40 to 100 mol%, more preferably from 50 to 100 mol%, further preferably from 60 to 100 mol%, in the total (100 mol%) of ether bonds and ester bonds (-OC(O)-R² -).

The polyol having a polyether framework means a polyol having a polyether chain such as a polyether polyol or a polyether polyester polyol.

In the present invention, as a polyol compound to obtain the silyl group-containing polymer (S), it is particularly preferred to use one or more types of polyols selected from a polyether polyol or a polyether polyester polyol, or to use one or more types of polyols selected from a polyether polyol and a polyether polyester polyol in combination with one or more types of polyols selected from a polyester polyol and a polycarbonate polyol. It is further preferred to use a polyether polyol or a polyether polyester polyol.

The polyether polyol is preferably a polyoxyalkylene polyol.

The alkylene group constituting the polyoxyalkylene polyol may, for example, be an ethylene group, a trimethylene group, a tetramethylene group, a pentamethylene group, a hexamethylene group, a propylene group, a butylene group or a methyltrimethylene group. Such a polyether polyol may be obtained by subjecting a corresponding cyclic ether compound or epoxide compound to ring-opening polymerization. The cyclic ether compound may, for example, be tetrahydrofuran or oxetane. The epoxide compound may, for example, be ethylene oxide, propylene oxide or butylene oxide. The polyether polyol may preferably, for example, be polyoxytetramethylene polyol, polyoxyethylene polyol, polyoxypropylene polyol or polyoxyethylene polyoxypropylene polyol.

The polyether polyester polyol may, for example, be a polyol obtained by condensation polymerization of an ether diol with a dibasic acid compound or a polyol obtained by ring-opening copolymerization (particularly preferably random copolymerization) of an epoxide compound with a cyclic ester. The ether diol may, for example, be diethylene glycol, dipropylene glycol, polyoxyethylene glycol, polyoxypropylene glycol or polyoxyethylene polyoxypropylene glycol. The dibasic acid compound may, for example, be phthalic acid, maleic acid, adipic acid or fumaric acid. The cyclic ester (lactone) may, for example, be β-propiolactone (number of carbon atoms: 3), δ-valerolactone (number of carbon atoms: 5) or ε-caprolactone (number of carbon atoms: 6). Among them, ε-caprolactone is more preferred. The epoxide compound is as previously described.

The polyester polyol may, for example, be a polyol obtained by condensation polymerization of a low molecular diol such as ethylene glycol, propylene glycol, 1,4-butanediol or 1,6-hexanediol with the above dibasic acid compound.

The polycarbonate polyol is preferably one obtained by reacting a low molecular carbonate compound such as an alkylene carbonate, a dialkyl carbonate or a diaryl carbonate with a diol compound. Specific examples include polyhexamethylene carbonate diol, poly(3-methypentene carbonate) diol and polypropylene carbonate diol. Further, a mixture thereof or a copolymer thereof may also be mentioned.

The number of hydroxy groups of the polyol compound used to obtain the silyl group-containing polymer (S) in the present invention is preferably from 2 to 3, most preferably 2. That is, it is particularly preferred that a diol is used as the polyol compound. It is because if the number of hydroxy groups is within this range, it is easy to suppress the viscosity of the polyurethane prepolymer to be obtained at a low level.

Further, the average hydroxy value of the polyol compound is preferably from 5 to 225 mgKOH/g, more preferably from 7 to 115 mgKOH/g, particularly preferably from 10 to 112 mgKOH/g. It is because if the average hydroxy value is within this range, it is easy to suppress the viscosity of the polyurethane prepolymer to be obtained at a low level.

Particularly, in the case of obtaining the silyl group-containing polymer (S1), the average hydroxy value of the polyol compound is preferably from 5 to 112 mgKOH/g, more preferably from 7 to 56 mgKOH/g. Further, in the case of obtaining the silyl group-containing polymer (S2) or (S3), the average hydroxy value of the polyol compound is preferably from 25 to 225 mgKOH/g, more preferably from 30 to 115 mgKOH/g.

### <POLYISOCYANATE COMPOUND>

In order to obtain the silyl group-containing polymer (S2) or (S3), a polyurethane prepolymer is used. As the polyisocyanate compound used for synthesis of this polyurethane prepolymer, a known one may be used. Specifically, it may, for example, be a diisocyanate compound such as diphenylmethane diisocyanate, tolylene diisocyanate, xylylene diisocyanate, methylene-bis(cyclohexyl isocyanate), isophorone diisocyanate or hexamethylene diisocyanate. One type of such a diisocyanate compound may be used alone, or two or more types may be used in combination. It is preferred that the polyisocyanate compound has a flexible chain with a view to improve the flexibility of the adherence substance to be obtained. Specifically, it may, for example, be tolylene diisocyanate, m-xylylene diisocyanate or isophorone diisocyanate. Among them, tolylene diisocyanate or isophorone diisocyanate is particularly preferred.

### <POLYURETHANE PREPOLYMER>

The polyurethane prepolymer used to obtain the silyl group-containing polymer (S2) or (S3) is obtained by reacting the polyol compound with a polyisocyanate compound. The terminal of the polyurethane prepolymer is an isocyanate group or a hydroxy group, and it is suitably selected according to the method of introducing a hydrolyzable silyl group. That is, it may be an isocyanate group-terminated polyurethane prepolymer or a hydroxy group-terminated polyurethane prepolymer.

At the time of synthesizing the polyurethane prepolymer, the proportion of the polyol of the polyol compound and the polyisocyanate compound to be reacted is suitably selected according to the molecular weight (average hydroxy value) of the polyol compound and the target molecular weight of the polyurethane prepolymer. In the case of obtaining an isocyanate group-terminated polyurethane prepolymer, the proportion of the polyol compound and the polyisocyanate compound to be reacted is preferably such that the isocyanate index is more than 100 and at most 200, more preferably from 105 to 170, wherein the isocyanate index is defined as 100 times the value of the molar ratio of "NCO groups of the polyisocyanate compound/OH groups of the polyol compound". In the case of obtaining a hydroxy group-terminated polyurethane prepolymer, the proportion of the polyol compound and the polyisocyanate compound is preferably at least 50 and less than 100, more preferably from 50 to 98, by the isocyanate index.

The molecular weight of the polyurethane prepolymer is preferably, in the number average molecular weight, from 2,000 to 100,000, more preferably from 3,000 to 80,000.

The polyurethane resin used to obtain the silyl group-containing polymer (S3) is obtained by further subjecting the polyurethane prepolymer to a chain extending reaction by using a chain extending agent. The polyurethane prepolymer is the same as in the case of the silyl group-containing polymer (S).

### <CHAIN EXTENDING AGENT>

As the chain extending agent, in the case where an isocyanate group terminated polyurethane prepolymer is used as the polyurethane prepolymer, a low molecular diol or a low molecular diamine is preferred. The low molecular diol is preferably, for example, ethylene glycol, propylene glycol, 1,4-butanediol or 1,6-hexanediol. The low molecular diamine may, for example, be an aliphatic diamine such as ethylenediamine, propylenediamine, trimethylenediamine, tetramethylenediamine, pentamethylenediamine, hexamethylenediamine or 2,2,4-trimethylhexamethylenediamine; an alicyclic diamine such as piperazine, isophoronediamine or dicyclohexylmethane-4,4'-diamine; or an aromatic diamine such as tolylenediamine, phenylenediamine or xylylenediamine.

In the case where a hydroxy group-terminated polyurethane prepolymer is used as the polyurethane prepolymer, a diisocyanate compound is preferred as the chain extending agent. The diisocyanate compound is the same as the above one used for the polyurethane prepolymer.

### <POLYURETHANE POLYMER>

The polyurethane polymer in the present invention is obtained by subjecting the polyurethane prepolymer to a chain extending reaction. The terminal of the polyurethane polymer is an isocyanate group, a hydroxy group or an amino group, and it is suitably selected according to the method to introduce a hydrolyzable silyl group. That is, the polyurethane polymer may be an isocyanate group-terminated polyurethane polymer, a hydroxy group-terminated polyurethane polymer or an amino group-terminated polyurethane polymer.

At the time of synthesizing the polyurethane polymer, the proportion of the polyurethane prepolymer and the chain extending agent to be reacted is suitably selected according to the molecular weight of the polyurethane prepolymer and the target molecular weight of the polyurethane polymer.

In the case of subjecting an isocyanate group-terminated polyurethane prepolymer to chain extension by using a low molecular diol as the chain extending agent, the proportion of the polyurethane prepolymer and the low molecular diol is preferably such that the isocyanate index is more than 100 and at most 200, more preferably more than 100 and at most 150, wherein the isocyanate index is defined as 100 times the value of the molar ratio of "NCO groups of the polyurethane prepolymer/OH groups of the low molecular diol". If the proportion is within this range, it is possible to obtain the isocyanate group-terminated polyurethane resin. Further, in the case of obtaining a hydroxy group-terminated polyurethane resin, the isocyanate index is preferably at least 50 and less than 100, more preferably from 50 to 98.

In the case of subjecting the isocyanate group-terminated polyurethane prepolymer to chain extension by using a low molecular diamine as the chain extending agent, the proportion of the polyurethane prepolymer and the low molecular diamine is preferably such that the isocyanate index is at least 50 and less than 100, and more preferably from 50 to 98, wherein the isocyanate index is defined as 100 times the value of the molar ratio of "NCO groups of the polyurethane prepolymer/NH₂ groups of the low molecular diamine". If the proportions is within this range, it is possible to obtain the amino group-terminated polyurethane polymer.

Further, in the case of obtaining an isocyanate group-terminated polyurethane polymer, the isocyanate index is preferably more than 100 and at most 200, more preferably more than 100 and at most 150.

In the case of subjecting a hydroxy group-terminated polyurethane prepolymer to chain extension by using a diisocyanate compound as the chain extending agent to obtain the isocyanate group-terminated polyurethane polymer, the proportion of the polyurethane prepolymer and the diisocyanate compound is preferably such that the isocyanate index is more than 100 and at most 200, more preferably from 101 to 150, wherein the isocyanate index is defined as 100 times the value of the molar ratio of "NCO groups of the chain extending agent/OH groups of the polyurethane prepolymer".

Further, in the case of obtaining the hydroxy group-terminated polyurethane polymer, the isocyanate index is preferably at least 50 and less than 100, more preferably from 50 to 98.

The molecular weight of the polyurethane polymer is preferably, in the number average molecular weight, from 4,000 to 500,000, more preferably from 8,000 to 250,000.

### <HYDROLYZABLE SILYL GROUP>

The hydrolyzable silyl group in the present invention is a silyl group having a hydrolyzable group. Specifically, it is preferably a silyl group represented by -SiXₐR³₍₃₋ₐ₎, wherein a is an integer of from 1 to 3. a is preferably from 2 to 3, most preferably 3.

Further, R³ is a C₁₋₂₀ monovalent organic group and is preferably a C₁₋₆ monovalent organic group. Specifically, it may, for example, be a methyl group, an ethyl group, a propyl group, a butyl group or a pentyl group. R³ may have a substituent. The substituent may, for example, be a methyl group or a phenyl group.

In the case where the hydrolyzable silyl group has a plurality of R³, each of R³'s may be the same or different from one another. That is, in the case where a is 1, each of two R³'s bonded to one silicon atom (Si), which are independent of each other, represents a C₁₋₂₀ monovalent organic group which may have a substituent.

Further, the above X represents a hydroxy group (-OH) or a hydrolyzable group. The hydrolyzable group may, for example, be -OR group (R is a hydrocarbon group having at most 4 carbon atoms). Such -OR group is preferably an alkoxy group or an alkenyloxy group, particularly preferably an alkoxy group.

The number of the carbon atoms of the alkoxy group or the alkenyloxy group is preferably at most 4. Specifically, it may, for example, be a methoxy group, an ethoxy group, a propoxy group or a propenyloxy group. Among them, a methoxy group or an ethoxy group is more preferred. In this case, it is possible to further improve the curing speed of the curable composition.

In the case where the hydrolyzable silyl group has a plurality of X, each of X's may be the same or different from one another. That is, when a is 2 or 3, each of X's which are independent of one another, represents a hydroxy group or a hydrolyzable group.

The hydrolyzable silyl group is preferably a trialkoxysilyl group, more preferably a trimethoxysilyl group or a triethoxysilyl group, particularly preferably a trimethoxysilyl group. It is because the storage stability of the silyl group-containing polymer (S) is good, and the curing speed of the curable composition is high, which is suitable for production of the adherence substance.

### <INTRODUCTION OF HYDROLYZABLE SILYL GROUP>

In the present invention, a hydrolyzable silyl group is introduced to a molecular terminal of the polyol compound, the polyurethane prepolymer or the polyurethane polymer. The method of introducing a hydrolyzable silyl group may, for example, be a method (PQ1) using an isocyanate silane, a method (PQ2) using an aminosilane, a method (PQ3) using a mercaptosilane, a method (PQ4) using an epoxysilane or a method (PQ5) using a hydrosilane.

In the case where the silyl group-containing polymer (S) has a urethane bond or a urea bond, the ratio (molar ratio of MU/MS) of the total amount (MU) of urethane bonds and urea bonds to the amount (MS) of the hydrolyzable silyl group is not particularly limited, but MU/MS (molar ratio) is preferably from 1/1 to 100/1, more preferably from 2/1 to 90/1. If the ratio is within this range, adhesive strength and flexibility of the adherence substance can be controlled, and further, the stability of the adhesive strength is good. A urethane bond is formed by a reaction of an isocyanate group and a hydroxy group, and a urea bond is formed by a reaction of an isocyanate group and an amino group.

In the case of the silyl group-containing polymer (S2) or (S3), the molar ratio MU/MS can be controlled by e.g. the molecular weight of the polyurethane prepolymer or the polyurethane polymer.

### <METHOD (PQ1) USING ISOCYANATE SILANE>

In the method (PQ1), the functional group at the terminal of the polyol compound, the polyurethane prepolymer or the polyurethane polymer is a group reactive with an isocyanate group, and the functional group at the terminal is reacted with an isocyanate silane to introduce a hydrolyzable silyl group.

The isocyanate silane may, for example, be isocyanatomethyltrimethoxysilane, 2-isocyanatoethyltrimethoxysilane, 3-isocyanatopropyltrimethoxysilane, 4-isocyanatobutyltrimethoxysilane, 5-isocyanatopentyltrimethoxysilane, isocyanatomethyltriethoxysilane, 2-isocyanatoethyltriethoxysilane, 3-isocyanatopropyltriethoxysilane, 4-isocyanatobutyltriethoxysilane, 5-isocyanatopentyltriethoxysilane, isocyanatomethylmethyldimethoxysilane, 2-isocyanatoethylethyldimethoxysilane, 3-isocyanatopropyltrimethoxysilane or 3-isocyanatopropyltriethoxysilane.

Among them, 3-isocyanatopropyltrimethoxysilane or 3-isocyanatopropyltriethoxysilane is preferred.

The group reactive with an isocyanate group may, for example, be a hydroxy group or an amino group. In the case of using a hydroxy group, for example, a polyol compound, a hydroxy group-terminated polyurethane prepolymer, a hydroxy group-terminated polyurethane polymer obtained by subjecting a hydroxy group-terminated polyurethane prepolymer further to a chain extending reaction by using a diisocyanate compound, or a hydroxy group-terminated polyurethane prepolymer obtained by reacting an isocyanate group-terminated polyurethane prepolymer with a low molecular diol may be used.

In the case of using an amino group, for example, an amino group-terminated polyurethane polymer obtained by reacting an isocyanate group-terminated polyurethane prepolymer with a low molecular diamine may be used.

A catalyst may be used in this reaction. As the catalyst, a known urethane-forming catalyst may be employed. It may, for example, be an organic acid salt or organic metal compound, or a tertiary amine. Specifically, the organic acid salt or organic metal compound may, for example, be a tin catalyst such as dibutyltin dilaurate (DBTDL), a bismuth catalyst such as bismuth tris(2-ethylhexanoate), a zinc catalyst such as zinc naphthenate, a cobalt catalyst such as cobalt naphthenate or a copper catalyst such as copper 2-ethylhexanoate. The tertiary amine may, for example, be triethylamine, triethylenediamine or N-methylmorpholine.

### <METHOD (PQ2) USING AMINOSILANE>

In the method (PQ2), the functional group at the terminal of the polyol compound, the polyurethane prepolymer or the polyurethane polymer is a group reactive with an amino group, and the functional group at the terminal is reacted with an aminosilane to introduce a hydrolyzable silyl group. A group reactive with an amino group may be introduced at the terminal of the polyol compound, the polyurethane prepolymer or the polyurethane polymer, as the case requires.

The aminosilane may, for example, be 3-aminopropyltrimethoxysilane, 3-aminopropyltriethoxysilane, 3-aminopropyltriisopropoxysilane, 3-aminopropylmethyldimethoxysilane, 3-aminopropylmethyldiethoxysilane, 3-(2-aminoethyl)aminopropyltrimethoxysilane, 3-(2-aminoethyl)aminopropylmethyldimethoxysilane, 3-(2-aminoethyl)aminopropyltriethoxysilane, 3-(2-aminoethyl)aminopropylmethyldiethoxysilane, 3-(2-aminoethyl)aminopropyltriisopropoxysilane, 3-(2-(2-aminoethyl)aminoethyl)aminopropyltrimethoxysilane, 3-(6-aminohexyl)aminopropyltrimethoxysilane, 3-(N-ethylamino)-2-methylpropyltrimethoxysilane, N-(2-aminoethyl)aminomethyltrimethoxysilane, N-cyclohexylaminomethyltriethoxysilane, N-cyclohexylaminomethyldiethoxymethylsilane, ureidopropyltrimethoxysilane, ureidopropyltriethoxysilane, N-phenyl-3-aminopropyltrimethoxysilane, N-phenylaminomethyltrimethoxysilane, N-benzyl-3-aminopropyltrimethoxysilane, N-vinylbenzyl-3-aminopropyltriethoxysilane, N-(3-triethoxysilylpropyl)-4,5-dihydroimidazole, N-cyclohexylaminomethyltriethoxysilane, N-cyclohexylaminomethyldiethoxymethylsilane, N-phenylaminomethyltrimethoxysilane, (2-aminoethyl)aminomethyltrimethoxysilane or N,N'-bis[3-(trimethoxysilyl)propyl]ethylenediamine.

Among them, 3-aminopropyltrimethoxysilane or 3-aminopropyltriethoxysilane is preferred.

The group reactive with an amino group may, for example, be an isocyanate group, an acryloyl group or a methacryloyl group. In the case of using an isocyanate group, for example, an isocyanate group-terminated polyurethane prepolymer, an isocyanate group-terminated polyurethane polymer obtained by subjecting a hydroxy group-terminated polyurethane prepolymer further to a chain extending reaction by using an isocyanate compound, or an isocyanate group-terminated polyurethane polymer obtained by subjecting an isocyanate group-terminated polyurethane prepolymer further to a chain extending reaction by using a low molecular diol compound may be used.

In the case of using an acryloyl group or a methacryloyl group, for example, an isocyanate group-terminated polyurethane prepolymer reacted with a hydroxyalkyl acrylate or a hydroxyalkyl methacrylate, a polyol compound, or a hydroxy group-terminated polyurethane prepolymer or a hydroxy group-terminated polyurethane polymer reacted with an acrylic acid or a methacrylic acid may be used. The hydroxyalkyl acrylate may, for example, be hydroxyethyl acrylate or hydroxybutyl acrylate. The hydroxyalkyl methacrylate may, for example, be hydroxyethyl methacrylate or hydroxybutyl methacrylate. The reaction of an amino group with an isocyanate group is a urea bond-forming reaction. In this reaction, the above urethane-forming catalyst may be employed. The reaction of an amino group with an acryloyl group is Michael addition reaction.

### <METHOD (PQ3) USING MERCAPTOSILANE>

In the method (PQ3), the functional group at the terminal of the polyol compound, the polyurethane prepolymer or the polyurethane polymer is a group reactive with a mercapto group, and the functional group at the terminal is reacted with a mercaptosilane to introduce a hydrolyzable silyl group. A group reactive with a mercapto group may be introduced at the terminal of the polyol compound, the polyurethane prepolymer or the polyurethane polymer, as the case requires.

The mercaptosilane may, for example, be 3-mercaptopropyltrimethoxysilane, 3-mercaptopropylmethyldimethoxysilane, 3-mercaptopropyltriethoxysilane, 3-mercaptopropylmethyldiethoxysilane, mercaptomethyltrimethoxysilane or mercaptomethyltriethoxysilane. Among them, 3-mercaptopropyltrimethoxysilane or 3-mercaptopropyltriethoxysilane is preferred.

The group reactive with a mercapto group may, for example, be an isocyanate group, an acryloyl group or an allyl group. In the case of using an isocyanate group or an acryloyl group, the same compound as in the method (PQ2) using an aminosilane may be used. In the case of using an allyl group, the terminal of the polyurethane prepolymer or the polyurethane polymer is made into an isocyanate group and then is reacted with an allyl alcohol to obtain an allyl group.

In the reaction of a mercapto group and an isocyanate group, a catalyst may be employed, in the same manner as in a urethane-forming reaction. In the reaction of a mercapto group with an acryloyl group or an allyl group, a radical initiator is preferably used. The radical initiator may, for example, be azobisisobutyronitrile (AIBN).

### <METHOD (PQ4) USING EPOXYSILANE>

In the method (PQ4), the functional group at the terminal of the polyol compound, the polyurethane prepolymer or the polyurethane polymer is a group reactive with an epoxy group, and the functional group at the terminal is reacted with an epoxysilane to introduce a hydrolyzable silyl group. A group reactive with an epoxy group may be introduced at the terminal of the polyol compound, the polyurethane prepolymer or the polyurethane polymer, as the case requires.

As the epoxy silane, for example, 3-glycidoxypropyltrimethoxysilane, 3-glycidoxypropyltriethoxysilane, 3-glycidoxypropylmethyldimethoxysilane, 2-(3,4-epoxycyclohexyl)ethyltrimethoxysilane or 2-(3,4-epoxycyclohexyl)ethyltriethoxysilane is preferred. Among them, 3-glycidoxypropyltrimethoxysilane or 3-glycidoxypropyltriethoxysilane is preferred.

The group reactive with an epoxy group may, for example, be a hydroxy group or an amino group. With respect to each of the hydroxy group and the amino group, the same compound as in the method (PQ1) using an isocyanate silane may be used. As a catalyst in the reaction with an epoxy group, a known catalyst such as an amine or an acid anhydride may be employed. It may, for example, be a chain aliphatic polyamine, an alicyclic polyamine, an aromatic polyamine, a modified aliphatic polyamine or an imidazole compound. Particularly, a tertiary amine such as N,N-dimethylpiperazine, triethylenediamine, 2,4,6-tris(dimethylaminomethyl)phenol (DMP-30) or benzyldimethylamine (BDMA) is preferred.

### <METHOD (PQ5) USING HYDROSILANE>

In the method (PQ5), the functional group at the terminal of the polyol compound, the polyurethane prepolymer or the polyurethane polymer is a group capable of being hydrosilylated, and the functional group at the terminal is reacted with a hydrosilane to introduce a hydrolyzable silyl group. A group capable of being hydrosilylated may be introduced at the terminal of the polyol compound, the polyurethane prepolymer or the polyurethane polymer, as the case requires.

The hydrosilane may, for example, be trimethoxysilane, triethoxysilane, methyldiethoxysilane, methyldimethoxysilane, phenyldimethoxysilane or 1-[2-(trimethoxysityt)ethyt]-1,1,3,3-tetramethyldisiloxane.

The group capable of being hydrosilylated may, for example, be an acryloyl group or an allyl group. With regard to each of the acryloyl group or the allyl group, the same compound as in the method (PQ3) using a mercaptosilane may be used. In this reaction, it is preferred to use a hydrosilylation catalyst. The hydrosilylation catalyst may, for example, be chloroplatinic acid.

### <PRODUCTION PROCESS OF ADHERENCE SUBSTANCE>

The process for producing an adherence substance in the present invention comprises, in the case of using a silyl group-containing polymer (S1), a step (PP1A) of introducing a hydrolyzable silyl group to a molecular terminal of the polyol compound to prepare a silyl group-containing polymer (S1); and a step (PP1B) of curing a curable composition containing the silyl group-containing polymer (S1) to obtain an adherence substance.

Further, the process for producing an adherence substance in the present invention comprises, in the case of using a silyl group-containing polymer (S2), a step (PP2A) of reacting a polyol compound with a polyisocyanate compound to prepare a polyurethane prepolymer; a step (PP2B) of introducing a hydrolyzable silyl group to a molecular terminal of the polyurethane prepolymer to prepare a silyl group-containing polymer (S2); and a step (PP2C) of curing a curable composition containing the silyl group-containing polymer (S2) to obtain an adherence substance.

In the case of using a silyl group-containing polymer (S3), the process comprises a step (PP3A) of reacting a polyol compound with a polyisocyanate compound to prepare a polyurethane prepolymer; a step (PP3B) of subjecting the polyurethane prepolymer to a chain extending reaction by using a chain extending agent to prepare a polyurethane polymer; a step (PP3C) of introducing a hydrolyzable silyl group to a molecular terminal of the polyurethane polymer to prepare a silyl group-containing polymer (S3); and a step (PP3D) of curing a curable composition containing the silyl group-containing polymer (S3) to obtain an adherence substance.

The steps (PP2A) and (PP3A) of preparing a polyurethane prepolymer are the same steps. Further, the steps (PP1A), (PP2B) and (PP3C) of introducing a hydrolyzable silyl group are the same steps. Further, the steps (PP1 B), (PP2C) and (PP3D) of curing a curable composition to obtain an adherence substance are the same steps.

### <STEPS ((PP2A) AND (PP3A)) OF PREPARING POLYURETHANE PREPOLYMER>

A polyurethane prepolymer is obtained by reacting a polyol compound with a polyisocyanate compound. The proportion in the reaction is as described above. Further, in this reaction, a catalyst may be employed. As the catalyst, the above urethane-forming catalyst may be employed. The reaction temperature is preferably from 40 to 160°C, more preferably from 80 to 120°C.

### <STEP (PP3B) OF PREPARING POLYURETHANE POLYMER>

A polyurethane polymer is obtained by subjecting the polyurethane prepolymer to a chain extending reaction by using a chain extending agent. The proportion in the reaction is as described above. Further, in this reaction, a catalyst may be employed. As the catalyst, the above urethane-forming catalyst may be employed. The reaction temperature is preferably from 40 to 160°C, more preferably from 80 to 120°C.

### <STEPS ((PP1A), (PP2B) AND (PP3C)) OF INTRODUCING HYDROLYZABLE SILYL GROUP>

The step of introducing a hydrolyzable silyl group to the polyol compound, the polyurethane prepolymer or the polyurethane polymer is as described in the above sections of steps (PQ1) to (PQ5). The proportion of the hydrolyzable silyl group to be introduced (hereinafter also referred to as the hydrolyzable silyl group introducing proportion) is preferably from 50 to 100 mol%, more preferably from 80 to 100 mol%, provided that all terminals that are theoretically reactive is defined as 100 mol%.

### <STEPS ((PP1B), (PP2C) AND (PP3D)) OF CURING CURABLE COMPOSITION TO OBTAIN ADHERENCE SUBSTANCE>

A curable composition containing the silyl group-containing polymer (S) is cured to obtain an adherence substance.

The curable composition in the present invention may contain another polymer having a hydrolyzable silyl group. The proportion of such another polymer having a hydrolyzable silyl group is preferably at most 30 mass%, more preferably at most 10 mass%, in the entire curable composition.

The silyl group-containing polymer (S) and, as the case requires, the polymer having another hydrolyzable silyl group are preferably sufficiently mixed, incorporating hereinafter-described various types of additives, in the presence or absence of a solvent to be made into a curable composition. The curable composition preferably contains the silyl group-containing polymer (S1) from the viewpoint of excellent flexibility of the cured product.

### <ADDITIVES>

The curable composition in the present invention may contain additives. However, in the curable composition, it is preferred not to use a plasticizer. Particularly, it is preferred not to use an ester type plasticizer such as dioctyl phthalate. It is because, if an ester type plasticizer is used, the adhesive strength between the cured product (adherence substance) and the substrate may be decreased, and an adhesive deposit may result.

### [CURING AGENT]

The curable composition in the present invention is cured by contact with water. Accordingly, it reacts with water in the atmosphere to undergo moisture curing. Otherwise, immediately before the curing, water (H₂O) may be added as a curing agent. In such a case, the amount of water is preferably from 0.01 to 5 parts by mass, more preferably from 0.01 to 1 part by mass, particularly preferably from 0.05 to 0.5 part by mass, per 100 parts by mass of the total amount of the silyl group-containing polymer (S) and another polymer having a hydrolyzable silyl group. The amount of the curing agent is adjusted to be at least 0.01 part by mass, whereby the curing can effectively be promoted, and the amount of the curing agent is adjusted to be at most 5 parts by mass, whereby the working time in use can be secured.

### [CURING CATALYST]

It is preferred to incorporate a curing catalyst (a curing accelerator) to accelerate the hydrolysis and/or crosslinking reaction of the hydrolyzable silyl groups.

As such a curing catalyst, a known catalyst may suitably be used as a component to accelerate the reaction of the hydrolyzable silyl groups. Specifically, it may, for example, be an organic tin carboxylate such as dibutyltin diacetate, dibutyltin dilaurate, dioctyltin dilaurate, (n-C₄H₉)₂Sn(OCOCH=CHCOOCH₃)₂, (n-C₄H₉)₂Sn(OCOCH=CHCOO(n-C₄H₉))₂, (n-C₈H₁₇)₂Sn(OCOCH=CHCOOCH₃)₂, (n-C₈H₁₇)₂Sn(OCOCH=CHCOO(n-C₄H₉))₂ or (n-C₈H₁₇)₂Sn(OCOCH=CHCOO(iso-C₈H₁₇))₂; a sulfur-containing organic tin compound such as (n-C₄H₉)₂Sn(SCH₂COO), (n-C₈H₁₇)₂Sn(SCH₂COO), (n-C₈H₁₇)₂Sn(SCH₂CH₂COO), (n-C₈H₁₇)₂Sn(SCH₂COOCH₂CH₂OCOCH₂S), (n-C₄H₉)₂Sn(SCH₂COO(iSO-C₈H₁₇))₂, (n-C₈H₁₇)₂Sn(SCH₂COO(iso-C₈H₁₇))₂, (n-C₈H₁₇)₂Sn(SCH₂COO(n-C₈H₁₇))₂ or (n-C₄H₉)₂SnS; an organic tin oxide such as (n-C₄H₉)₂SnO or (n-C₈H₁₇)₂SnO; a reaction product of an ester compound selected from the group consisting of ethyl silicate, dimethyl maleate, diethyl maleate, dioctyl maleate, dimethyl phthalate, diethyl phthalate and dioctyl phthalate, with the above-mentioned organic tin oxide; a chelate tin compound such as (n-C₄H₉)₂Sn(acac)₂, (n-C₈H₁₇)₂Sn(acac)₂, (n-C₄H₉)₂Sn(OC₈H₁₇)(acac), (n-C₄H₉)₂Sn(OC(CH₃)CHCO₂C₂H₅)₂, (n-C₈H₁₇)₂Sn(OC(CH₃)CHCO₂C₂H₅)₂, (n-C₄H₉)₂Sn(OC₈H₁₇)(OC(CH₃)CHCO₂C₂H₅) or bisacetyl acetonate tin (where the above acac means an acetylacetonate ligand, and OC(CH₃)CHCO₂C₂H₅ means an ethyl acetoacetate ligand); a reaction product of an alkoxysilane selected from the group consisting of tetramethoxysilane, tetraethoxysilane and tetrapropoxysilane, with the above chelate tin compound; or an organic tin compound containing a -SnOSn- bond, such as (n-C₄H₉)₂(CH₃COO)SnOSn(OCOCH₃)(n-C₄H₉)₂ or (n-C₄H₉)₂(CH₃O)SnOSn(OCH₃)(n-C₄H₉)₂.

Further, specific examples of the curing catalyst include a bivalent tin carboxylate such as tin 2-ethylhexanoate, tin n-octylate, tin naphthenate or tin stearate; a metal salt other than a tin salt of an organic carboxylic acid such as octylic acid, oleic acid, naphthenic acid or stearic acid; a calcium carboxylate, a zirconium carboxylate, an iron carboxylate, a vanadium carboxylate, a bismuth carboxylate such as bismuthtris-2-ethyl hexanoate, a lead carboxylate, a titanium carboxylate, a nickel carboxylate or the like; a titanium alkoxide such as tetraisopropyl titanate, tetrabutyl titanate, tetramethyl titanate or tetra(2-ethylhexyl titanate); an aluminum alkoxide such as aluminum isopropylate or mono-sec-butoxyaluminum diisopropylate; a zirconium alkoxide such as zirconium n-propylate or zirconium n-butyrate; a titanium chelate such as titanium tetraacetylacetonate, dibutyloxytitanium diacetylacetonate, titanium ethylacetoacetate, titanium octylene glycolate or titanium lactate; an aluminum chelate such as aluminum trisacetylacetonate, aluminum trisethylacetoacetate, or diisopropoxy aluminum ethylacetoacetate; a zirconium compound such as zirconium tetraacetylacetonate, zirconium bisacetylacetonate, zirconium acetylacetonate bisethyl actoacetate or zirconium acetate; an acidic compound such as phosphoric acid, p-toluenesulfonic acid or phthalic acid; an aliphatic monoamine such as butylamine, hexylamine, octylamine, decylamine or laurylamine; an aliphatic diamine such as ethylenediamine or hexanediamine; an aliphatic polyamine such as diethylenetriamine, triethylenetetramine or tetraethylenepentamine; a heterocyclic amine such as piperidine, piperazine or 1,8-diazabicyclo(5.4.0)udecene-7; an aromatic amine such as metaphenylenediamine, an alkanolamine such as monoethanolamine, diethanolamine or triethanolamine; a trialkylamine such as triethylamine; a primary to tertiary ammonium acid salt made of the above amine and an organic acid such as an aliphatic monocarboxylic acid (such as formic acid, acetic acid, octylic acid or 2-ethylhexanoic acid), an aliphatic polycarboxylic acid (such as oxalic acid, malonic acid, succinic acid, glutaric acid or adipic acid), an aromatic monocarboxylic acid (such as benzoic acid, toluic acid or ethylbenzoic acid), an aromatic polycarboxylic acid (such as phthalic acid, isophthalic acid, terephthalic acid, nitrophthalic acid or trimellitic acid), a phenol compound (such as phenol or resorcinol), a sulfonic acid compound (such as an alkyl benzenesulfonic acid, toluenesulfonic acid or benzenesulfonic acid) or a phosphoric acid compound, or an inorganic acid such as hydrochloric acid, hydrobromic acid or sulfuric acid; an ammonium hydroxide such as triethylmethylammonium hydroxide, trimethylbenzylammonium hydroxide, hexyltrimethylammonium hydroxide, octyltrimethylammonium hydroxide, decyltrimethylammonium hydroxide, dodecyltrimethylammonium hydroxide, octyldimethylethylammonium hydroxide, decyldimethylethylammonium hydroxide, dodecyldimethylethylammonium hydroxide, dihexyldimethylammonium hydroxide, dioctyldimethylammonium hydroxide, didecyldimethylammonium hydroxide or didodecyldimethylammonium hydroxide; and an amine compound such as various modified amines to be used as a curing agent for an epoxy resin.

These curing catalysts may be used alone or in combination as a mixture of two or more of them. In a case where two or more of them are combined, it is preferred to combine, for example, an aliphatic monoamine or another above-mentioned amine compound to the above-mentioned metal-containing compound such as a reaction product of the above-mentioned bivalent tin carboxylate, organic tin carboxylate or organic tin oxide with an ester compound, since it is thereby possible to obtain an excellent curability.

In a case where a curing catalyst is to be added, its amount is preferably from 0.001 to 10 parts by mass, more preferably from 0.01 to 5 parts by mass, per 100 parts by mass of the total amount of the silyl group-containing polymer (S) and another polymer having a hydrolyzable silyl group. When the amount of the curing catalyst is adjusted to be at least 0.001 part by mass, the curing speed can effectively be accelerated, and when the amount of the curing catalyst is adjusted to be at most 10 parts by mass, it is possible to secure a working time at the time of its use.

### [SOLVENT]

The curable composition in the present invention has a low viscosity and can be applied without using any solvent, but it may contain a solvent.

Such a solvent is not particularly limited, and it may, for example, be an aliphatic hydrocarbon, an aromatic hydrocarbon, a halogenated hydrocarbon, an alcohol, a ketone, an ester, an ether, an ester alcohol, a ketone alcohol, an ether alcohol, a ketone ether, a ketone ester or an ester ether.

Among them, it is preferred to employ an alcohol as the solvent, since the storage stability of the curable composition can thereby be improved. Such an alcohol is preferably an alkyl alcohol having from 1 to 10 carbon atoms, more preferably methanol, ethanol, isopropanol, isopentyl alcohol or hexyl alcohol, further preferably methanol or ethanol. Particularly when methanol is employed, if its amount is increased, the curing time of the curable composition can be prolonged. This is an effective technique to prolong a so-called pot life i.e. the time until the curable composition reaches the predetermined viscosity after its preparation.

In a case where a solvent is added to the curable composition, its amount is preferably at most 500 parts by mass, more preferably from 1 to 100 parts by mass, per 100 parts by mass of the total amount of the silyl group-containing polymer (S) and another polymer having a hydrolyzable silyl group. If the amount exceeds 500 parts by mass, shrinkage of the cured product may occur along with evaporation of the solvent.

### [DEHYDRATING AGENT]

In order to improve the storage stability, the curable composition in the present invention may contain a small amount of a dehydrating agent within a range not to impair the effects of the present invention.

A specific example of such a dehydrating agent may, for example, be an alkyl orthoformate such as methyl orthoformate or ethyl orthoformate; an alkyl orthoacetate such as methyl orthoacetate or ethyl orthoacetate; a hydrolyzable organic silicone compound such as methyl trimethoxysilane, vinyl trimethoxysilane, tetramethoxysilane or tetraethoxysilane; or a hydrolyzable organic titanium compound. Among them, vinyl trimethoxysilane or tetraethoxysilane is preferred from the viewpoint of the cost and dehydrating ability.

In a case where a dehydrating agent is incorporated to the curable composition, its amount is preferably from 0.001 to 30 parts by mass, more preferably from 0.01 to 10 parts by mass, per 100 parts by mass of the total amount of the silyl group-containing polymer (S) and another polymer having a hydrolyzable silyl group.

### [OTHER ADDITIVES]

The following filler, reinforcing agent, stabilizer, flame retardant, antistatic agent, release agent and antifungal agent may be incorporated to the curable composition.

The filler or reinforcing agent may, for example, be carbon black, aluminum hydroxide, calcium carbonate, titanium oxide, silica, glass, bone meal, wood meal or fiber flakes.

The stabilizer may, for example, be an antioxidant, an ultraviolet absorber or a light-stabilizer.

The flame retardant may, for example, be a chloroalkyl phosphate, dimethylmethyl phosphonate, ammonium polyphosphate or an organic bromine compound.

The release agent may, for example, be wax, soap or silicone oil.

The antifungal agent may, for example, be pentachlorophenol, pentachlorophenol laurate or bis(tri-n-butyltin) oxide.

Further, to the curable composition, tackifiers may be added for the purpose of improving the adhesion to the substrate.

### <ADHERENCE SUBSTANCE LAYER>

The curable composition in the present invention is obtained by mixing the silyl group-containing polymer (S), an optionally incorporated another polymer having a hydrolyzable silyl group and additives which may be incorporated as the case requires.

The adherence substance layer in the present invention is obtained by curing the above curable composition. The above curable composition is cured to obtain an adherence substance layer having a relatively low peel adhesive strength. That is, the adherence substance layer in the present invention is a cured product obtained by curing the above curable composition.

The adherence substance in the present invention preferably has a peel adhesive strength of at most 8 N/25 mm, more preferably more than 0 N/25 mm and at most 8 N/25 mm, further preferably more than 0 N/25 mm and at most 1 N/25 mm, particularly preferably from 0.005 to 0.8 N/25 mm. It is preferred that the curable composition in the present invention does not incorporate additives which may increase the adherence property.

The adherence substance layer in the present invention has a relatively low peel strength. Therefore, the adhesive strength to a polyester-type substrate tends to be low, and an adhesive deposit is likely to result. In the present invention, a substrate is subjected to an adhesion-facilitating treatment, whereby the adhesive strength between the substrate and the adherence substance is improved. On the other hand, the adhesive strength between an adherend and the adherence substance remains low. Therefore, an adhesive deposit can be suppressed while the adhesive strength to an adherend is weak or low.

The curable composition containing the silyl group-containing polymer (S) in the present invention has a low viscosity and good coatability. Accordingly, since good coatability can be obtained without a solvent, the curable composition can be made solvent free at the time of forming an adherence substance layer. Further, since the composition is excellent in curing property, when it contacts with water, it gets promptly and solidly cured (moisture-cured) and a cured product can be obtained. The hydrolyzable silyl group (-SiXₐR³₍₃₋ₐ₎) contributes to the moisture curing. Further, when the curable composition is applied on a substrate layer and cured, good adhesion to the substrate layer can be obtained. The cured product after the curing has good flexibility, good surface wettability and a low adherence property. Thus, it is suitable as an adherence substance layer, which has good wettability and adhesion to an adherend and at the same time has good removability.

Particularly, when the silyl group-containing polymer (S) has a polar bond such as a urethane bond or a urea bond, better weak adherence property or low adherence property may be obtained. The reason is not clear, but it is considered that such a polar bond acts to increase cohesion, adhesion to a substrate and adherence property to an adherend, of the cured product. On the other hand, it is considered that the hydrolyzable silyl group acts to lower the adherence property of an adherence substance to an adherend. Then, it is considered that their interaction contributes to weak adherence property or low adherence property.

Further, the position where a hydrolyzable silyl group is introduced is the molecular terminal of the silyl group-containing polymer (S), whereby the cohesion can be improved without preventing the molecular motion, and the adhesive strength stably is exhibited.

Accordingly, by controlling the ratio (molar ratio of MU/MS) of the total amount (MU) of urethane bonds and urea bonds to the amount (MS), it is possible to control the adhesive strength of the adherence substance. It is considered that a polar bond such as a urethane bond or a urea bond contributes also to good adhesion between the substrate layer and the adherence substance layer.

Further, the cured product (adherence substance layer) obtained by curing the curable composition in the present invention can obtain a good wettability to an adherend. It is considered that flexibility of the structure derived from a polyol contributes to such good wettability. That is, when a polyol has a linear structure having no branched structure, it has a molecular structure with which it is likely to move freely and acts to increase the flexibility. Further, a polyol structure having a polyether framework as the main component has a relatively low polarity. It is considered that with such a molecular structure, good wettability to an adherend can be obtained. It is considered that, particularly, as the chain length of the polyether framework is longer, the flexibility and the wettability are higher.

### <CURING OF CURABLE COMPOSITION>

The adherence substance layer in the present invention is obtainable by curing the curable composition in the present invention. The conditions for curing the curable composition may be set as the case requires. For example, one having a curable catalyst added, is prepared as the curable composition. A predetermined amount water is added as a curing agent thereto, followed by mixing thoroughly. The mixture is applied on the surface subjected to adhesion-facilitating treatment (treated surface) of a substrate. The application thickness is suitably set. Thereafter, the coated substrate is heated in an oven and aged at room temperature, whereby the curable composition can be cured. It is also effective to leave it in a humidified environment at the time of aging at room temperature or after such aging. Heating by e.g. an oven is suitably set depending upon e.g. the heat resistance temperature of the substrate. For example, it is preferred to leave it in an environment of from 60 to 120°C for from about 1 to 30 minutes. Particularly in a case where a solvent is used, it is preferred to set a constant drying time. However, rapid drying is not desirable, since it causes foaming. Further, in the oven, or after taking it out from the oven, steam may be applied. Further, in a case where primer treatment is carried out as adhesion-facilitating treatment, if heating is carried out at the time of curing of the curable composition, the adhesive strength between the substrate layer and the adherence substance layer is increased by the reaction of the primer layer with the curable composition. For example, heating for a short time at relatively high temperature is effective in some cases. Specifically, the short-time heating may, for example, be one at temperature of from 80 to 160°C (preferably from 100 to 150°C) for from 0.5 to 5 minutes (preferably from 1 to 4 minutes).

### <PRODUCTION PROCESS OF ADHESIVE LAMINATE>

The adhesive laminate of the present invention is produced by subjecting one surface of a polyester-type substrate to adhesion-facilitating treatment, applying the above curable composition to this treated surface, and curing the curable composition. The adhesion-facilitating treatment to a polyester-type substrate may be carried out on the same line as the line for curable composition application or on another line. That is, a substrate subjected to adhesion-facilitating treatment is preliminarily prepared as a material, and the curable composition may be applied thereto. As the substrate subjected to adhesion-facilitating treatment such as corona treatment, commercial products may be used.

In a case where primer treatment is carried out as the adhesion-facilitating treatment, a primer is applied to one surface of a substrate followed by drying. At the time of application, the primer may be diluted with a solvent and applied, as the case requires. The thickness of the primer layer after drying is preferably from 0.01 to 10 µm, more preferably from 0.02 to 5 µm, from the viewpoint of adhesive strength between the substrate layer and the adherence substance layer.

Application of the curable composition may be carried out continuously. That is, on the treated surface subjected to adhesion-facilitating treatment of a substrate taken out from a roll, the curable composition having a predetermined amount of water mixed, is applied and then heated and dried in an in-line oven. The obtained shaped product (laminate) is wound up, together with a separator if necessary. Such an wound up laminate is stored and aged in a humidified room temperature environment as the case requires to obtain a shaped adhesive laminate. In another application method, the substrate and the separator in the above method may be reversed. That is, the curable composition is initially applied on the separator, and then, the treated surface subjected to adhesion-facilitating treatment of the substrate may be bonded to the layer of the curable composition.

The thickness of the adherence substance layer is determined in relation to the thickness of the substrate in the design of the adhesive laminate, and it is preferably from 3 to 100 µm, preferably from 10 to 60 µm.

As the apparatus to apply the primer or the curable composition, various coaters may be utilized. It may, for example, be a gravure roll coater, a reverse roll coater, a kiss roll coater, a dip roll coater, a bar coater, a knife coater or a spray coater.

It is preferred that the adhesive laminate of the present invention has an adherence substance layer provided on one surface of a polyester-type substrate layer, and that the other side (back surface of the substrate) where an adherence substance layer is not provided is an untreated surface of the substrate (untreated substrate surface). With this condition, it becomes possible to wind up the substrate itself as a separator because one surface (treated surface) of the substrate has larger adhesive strength to the adherence substance layer than to the other surface (untreated surface). Further, in this case, it is not necessary to provide a particular separator, which leads to waste reduction.

Further, if a surface of the substrate is subjected to adhesion-facilitating treatment, it is not necessary to subject the back surface of the substrate (the other surface) to release agent treatment. A representative release agent treatment is application of a silicone compound. However, in a case where a silicone compound is applied, it is highly possible that the silicone compound is transferred to an adherend, and so-called silicone contamination possibly occurs. The adhesive laminate of the present invention does not require a release agent treatment, and therefore silicone contamination will not occur. Therefore, the adhesive laminate of the present invention is suitably applied to electronics hardwares such as semiconductor devices and liquid crystal substrates.

The adhesive laminate of the present invention has a relatively low adhesive strength, and is thereby suitable as various types of protective sheets. Particularly, in a case where a transparent polyester film is adapted as the polyester-type substrate, the adherence substance layer in the present invention has good transparency, and therefore it becomes possible to observe object articles while the adhesive laminate of the present invention is bonded as a protective sheet.

### EXAMPLES

Now, the present invention will be described in further detail with reference to Examples. However, it should be understood that the present invention is by no means restricted to such Examples.

In the following, propylene oxide will be sometimes abbreviated as PO, 3-isocyanatepropyltrimethoxysilane (isocyanate group content: 19.2 mass%) as TMS and dibutyltin dilaurate as DBTDL. As water, pure water was used. Further, in the following Working Examples and Comparative Examples, the following ones were used as the silyl group-containing polymers.

### REFERENCE PREPARATION EXAMPLE 1: Preparation of composite metal cyanide complex catalyst

By the following method, a zinc hexacyanocobaltate having tert-butyl alcohol as an organic ligand (hereinafter referred to as TBA-DMC catalyst) was prepared. In this Example, polyol X is a polyol having number average molecular weight (Mn) of 1,000, obtained by addition-polymerizing propylene oxide to dipropylene glycol.

Firstly, in a 500 ml flask, an aqueous solution comprising 10.2 g of zinc chloride and 10 g of water, was put, and while stirring this aqueous solution at 300 rpm and maintaining it at 40°C, an aqueous solution comprising 4.2 g of potassium hexacyanocobaltate (K₃[Co(CN)]₆) and 75 g of water, was dropwise added over a period of 30 minutes. After completion of the dropwise addition, the mixture was further stirred for 30 minutes. Thereafter, a mixture comprising 40 g of ethylene glycol mono-tert-butyl ether (hereinafter abbreviated as EGMTBE), 40 g of tert-butyl alcohol (hereinafter abbreviated as TBA), 80 g of water and 0.6 of polyol X, was added to the above mixture, followed by stirring at 40°C for 30 minutes and then at 60°C for 60 minutes. The obtained reaction mixture was subjected to filtration over a period of 50 minutes by means of a circular filtration plate with a diameter of 125 mm and a quantitative filter paper for fine particles (No. 5C manufactured by ADVANTEC) under pressure (0.25 MPa) to separate solid.

Then, to this cake containing the composite metal cyanide complex, a mixture comprising 18 g of EGMTBE, 18 g of TBA and 84 g of water, was added, followed by stirring for 30 minutes, whereupon pressure filtration (filtration time: 15 minutes) was carried out. To the cake containing the composite metal cyanide complex obtained by the filtration, a mixture comprising 54 g of EGMTBE, 54 g of TBA and 12 g of water, was further added, followed by stirring for 30 minutes, to obtain an EGMTBE/TBA slurry containing the composite metal cyanide complex having an organic ligand. This slurry was used as TBA-DMC catalyst.

5 g of this slurry was taken into a flask, preliminarily dried in a nitrogen stream and then dried under reduced pressure at 80°C for 4 hours. The obtained solid was weighed, whereby the concentration of the composite metal cyanide complex contained in this slurry was found to be 4.70 mass%.

### PREPARATION EXAMPLE 1: Preparation of silyl group-containing polymer (S1-1)

Into a 10 L stainless steel pressure resistant reactor equipped with a stirrer, 800 g of a polyoxypropylene diol (hydroxy group-based Mw=1,000) as an initiator and TBA-DMC catalyst as a polymerization catalyst were introduced. The amount of the TBA-DMC catalyst was 50 ppm to the finish mass.

After replacing the interior of the reactor with nitrogen, the temperature was raised to 140°C, and 80 g of PO was introduced into the reactor with stirring and reacted. This is a step to activate TBA-DMC catalyst by initially supplying a small amount of PO.

Then, after the pressure in the reactor decreased, 7,120 g of PO was supplied with stirring, and the temperature in the reactor was maintained to be 140°C, and the stirring speed was maintained to be 500 rpm for 11 hours to let the polymerization reaction proceed, thereby to obtain polyol A. This polyol A had an average hydroxy value of 11 mgKOH/g.

To a four-necked flask equipped with a stirrer, a reflux condenser, a nitrogen-introducing tube, a thermometer and a dropping funnel, 761.6 g of the polyol A obtained as described above, and 31.8 g of TMS as an isocyanate silane, were added, and DBTDL was added as a urethane-forming catalyst. The amount of DBTDL was adjusted to be an amount corresponding to 50 ppm to the total amount of the polyol A and TMS. And, the temperature was gradually raised to 80°C, and a reaction was carried out until the peak of NCO by IR (infrared absorption spectrum) disappeared, to obtain a silyl group-containing polymer (S1-1). The introducing proportion of hydrolyzable silyl groups was 100%.

### PREPARATION EXAMPLE 2: Preparation of silyl group-containing polymer (S1-2)

Into a 10 L stainless steel pressure resistant reactor equipped with a stirrer, 800 g of a polyoxypropylene triol (hydroxy group-based Mw=1,500) as an initiator and TBA-DMC catalyst as a polymerization catalyst were introduced. The amount of the TBA-DMC catalyst was 50 ppm to the finish mass.

After replacing the interior of the reactor with nitrogen, the temperature was raised to 140°C, and 80 g of PO was introduced into the reactor with stirring and reacted. This is a step to activate TBA-DMC catalyst by initially supplying a small amount of PO.

Then, after the pressure in the reactor decreased, 3,813 g of PO was supplied with stirring, and the temperature in the reactor was maintained to be 140°C, and the stirring speed was maintained to be 500 rpm for 11 hours to let the polymerization reaction proceed. After cooling to room temperature, 40 g of 40 mass%-potassium hydroxide aqueous solution was added, and while the stirring at 500 rpm was continued, vacuum dehydration was carried out at 100°C for 2 hours. Then, the temperature was raised to 120°C, and ethylene oxide was gradually introduced. In total, 640 g of ethylene oxide was subjected to reaction over a period of 6 hours, followed by cooling. Acidic pyrophosphoric acid was added to form a neutralized salt, and this was removed by filtration. Polyol B thus obtained had an average hydroxy value of 17 mgKOH/g.

To a four-necked flask equipped with a stirrer, a reflux condenser, a nitrogen-introducing tube, a thermometer and a dropping funnel, 1,000 g of the polyol B obtained as described above, and 63 g of TMS as an isocyanate silane, were added, and DBTDL was added as a urethane-forming catalyst. The amount of DBTDL was adjusted to be an amount corresponding to 50 ppm to the total amount of the polyol B and TMS. And, the temperature was gradually raised to 80°C, and a reaction was carried out until the peak of NCO by IR disappeared, to obtain a silyl group-containing polymer (S1-2). The introducing proportion of hydrolyzable silyl groups was 100%.

### PREPARATION EXAMPLE 3: Preparation of silyl group-containing polymer (S2-1)

359.4 g of polyoxypropylenediol having Mn=2,000 (average hydroxy value = 56.1 mgKOH/g) obtained by ring-opening polymerization of PO with propylene glycol and 60.0 g of isophorone diisocyanate (IPDI) were subjected to a reaction to obtain an isocyanate group-terminated polyurethane prepolymer (Mn: 5,000). As a catalyst, 0.01 g (25 ppm) of DBTDL was used. The isocyanate index was 150.

In the same manner as in Preparation Example 1, the obtained polyurethane prepolymer was reacted with 3-aminopropyltrimethoxysilane to obtain a polymer (S2-1) having a trimethoxysilyl group. The introducing proportion of hydrolyzable silyl groups was 100 mol%. The viscosity of the polymer (S2-1) was 150,000 mPa·s/25°C. The molar ratio MU/MS in the polymer (S2-1) was 3.0.

### CURABLE COMPOSITION

### EXAMPLES 1 to 8 and COMPARATIVE EXAMPLE 1

To 100 parts by mass of the above silyl group-containing polymer (S1-1), 1 part by mass of DBTDL as a catalyst, 0.03 part by mass of water, and a mixed solvent composed of 50 parts by mass of toluene and 50 parts by mass of methanol as a solvent were added, and they were sufficiently mixed to obtain a curable composition.

### EXAMPLES 11 to 18 and COMPARATIVE EXAMPLE 11

To 100 parts by mass of the above silyl group-containing polymer (S1-2), 1 part by mass of DBTDL as a catalyst, 0.03 part by mass of water, and a mixed solvent composed of 50 parts by mass of toluene and 50 parts by mass of methanol as a solvent were added, and they were sufficiently mixed to obtain a curable composition.

### EXAMPLES 21 to 28 and COMPARATIVE EXAMPLE 21

To 100 parts by mass of the above silyl group-containing polymer (S2-1), 1 part by mass of DBTDL as a catalyst, 0.03 part by mass of water, and a mixed solvent composed of 50 parts by mass of toluene and 50 parts by mass of methanol as a solvent were added, and they were sufficiently mixed to obtain a curable composition.

### <PREPARATION OF ADHESIVE LAMINATE>

An adhesive laminate was prepared by using the obtained curable composition, and was evaluated.

A PET film having a thickness of 25 µm (A4 size: 29.7 cm × 21 cm, a cut piece of LUMIRROR T60, a polyester film manufactured by Toray Industries, Inc.) was used as a substrate. One side of this substrate was subjected to the adhesion-facilitating treatment below. Then, the above curable composition was applied to the treated surface which had been subjected to adhesion-facilitating treatment by using an applicator. In Comparative Examples 1, 11 and 21, the above curable composition was applied directly to one surface of the substrate without subjecting the surface to adhesion-facilitating treatment. The curable composition was applied so that the thickness became about 15 µm, followed by curing and drying at 110°C for 2 minutes. The substrate was aged at 23°C and at a humidity of 50% for 7 days to obtain an adhesive laminate.

### <ADHESION-FACILITATING TREATMENT>

Corona discharge treatment: TOYOBO ESTER FILM E5107 (manufactured by Toyobo Co., Ltd., thickness: 25 µm) was used.

Primer 1 treatment: A hydroxy group-terminated urethane primer for an adhesive (product name: MP2000, manufactured by CEMEDINE CO., LTD.) was applied by the following method.

Primer 2 treatment: CORONATE L (manufactured by Nippon Polyurethane Industry Co., Ltd., trimethylolpropane adduct-type TDI, isocyanate group content: 13.5 mass%, solid content: 75 mass%) was applied by the following method.

Primer 3 treatment: DURANATE P301-75E (manufactured by Asahi Kasei Corporation, trimethylolpropane adduct-type HDI, isocyanate group content: 12.9 mass%, solid content: 75 mass%) was applied by the following method.

Primer 4 treatment: KBM-603 (N-(2-aminoethyl)-3-aminopropyl trimethoxysilane, manufactured by Shin-Etsu Chemical Co., Ltd.) was applied by the following method.

Primer 5 treatment: Polyester-TP-235 S20TM (manufactured by The Nippon Synthetic Chemical Industry Co., Ltd., a solvent-type amorphous polyester resin primer) was applied by the following method.

Primer 6 treatment: No. 40 (manufactured by The Yokohama Rubber Co., Ltd., a solvent-type synthetic rubber-type primer) was applied by the following method.

Primer 7 treatment: 8UA-347 (manufactured by Taisei Fine Chemical Co., Ltd., a solvent-type acryl urethane carbonate resin, urethane moieties/acryl moieties ratio=2/8, hydroxy value: 30) was applied by the following method.

### [METHOD OF PRIMER APPLICATION]

Each of primers 1 to 7 was applied to one surface of the above PET film (substrate) not subjected to surface treatment by using an applicator, followed by drying at 110°C for 1 minute, and it was left for aging at room temperature for 1 week. In the case of primer 5, immediately after primer application followed by drying at 110°C for 1 minute, the following evaluations were carried out without being aged. In each case, the application thickness was adjusted to be about 10 µm. With regard to each primer, peeling, turbidity or the like was not observed after aging.

### <EVALUATION OF PEEL STRENGTH>

An adhesive laminate was sufficiently cooled to room temperature, then it was bonded to a 25 µm-thick PET film (made of the same material as one used for the substrate) which was not subjected to a surface treatment, and it was press-bonded by a rubber roll of 2 kg. The adhesive laminate was left at room temperature for a predetermined period of time shown in Tables 1 to 6 after bonding, and then the peel strength (180° peel at a tension speed of 300 mm/min) was measured by using a tensile tester (RTE-1210, manufactured by ORIENTEC Co., Ltd.) prescribed in JIS B7721. It is shown that as this value is smaller, the adhesive strength is weaker and the peeling is easier, and the removability is excellent. These results are shown in Tables 1 to 6.

The unit for the peel strength shown in the Tables is N/25 mm. S means that an anchor failure resulted. That is, it means that an adhesive deposit resulted and the adherence substance was broken.

### <MEASUREMENT OF PEEL ADHESIVE STRENGTH>

An adhesive laminate was sufficiently cooled to room temperature, and a test piece (width: 25 mm) of the adhesive laminate was bonded to a 1.5 mm-thick stainless steel plate (SUS304 (JIS)) treated by bright annealing and was press-bonded by a rubber roll having a mass of 2 kg, in a temperature of 23°C. Upon expiration of 30 minutes after bonding, the peel strength (180° peel at a tension speed of 300 mm/min) was measured by using a tensile tester (RTE-1210, manufactured by ORIENTEC Co., Ltd.). The value of the peel strength after 30 minutes from bonding thus obtained is taken as the "peel adhesive strength", and is listed in Tables 1 to 6.

**TABLE 1**

| | | Ex.1 | Ex. 2 | Ex. 3 | Ex.4 | Ex. 5 |
|---|---|---|---|---|---|---|
| Adhesion-facilitating treatment | | Corona discharge treatment | Primer 1 MP-2000 | Primer 2 CORONATEL | Primer 3 P301-75E | Primer 4 KBM-603 |
| Peel strength | After 30 minutes | 0.08 | 0.10 | 0.10 | 0.09 | 0.10 |
| | After 24 hours | 0.08 | 0.11 | 0.10 | 0.10 | 0.11 |
| | After 72 hours | 0.09 | 0.10 | 0.11 | 0.11 | 0.10 |
| | After 168 hours | 0.11 | 0.12 | 0.11 | 0.10 | 0.11 |
| Stainless steel plate peel adhesive strength | | 0.09 | 0.11 | 0.10 | 0.10 | 0.09 |

**TABLE 2**

| | | Ex. 6 | Ex. 7 | Ex.8 | Comp. Ex. 1 |
|---|---|---|---|---|---|
| Adhesion-facilitating treatment | | Primer 5 TP-235 | Primer 6 No.40 | Primer 7 8UA-347 | Untreated |
| Peel strength | After 30 minutes | 0.09 | 0.10 | 0.09 | S |
| | After 24 hours | 0.10 | 0.10 | 0.11 | S |
| | After 72 hours | 0.11 | 0.11 | 0.10 | S |
| | After 168 hours | 0.13 | 0.10 | 0.12 | S |
| Stainless steel plate peel adhesive strength | | 0.09 | 0.10 | 0.11 | 0.10 |

Tables 1 and 2 show that in Comparative Example 1 where the substrate is not subjected to adhesion-facilitating treatment, an anchor failure and an adhesive deposit resulted. By contrast, in Examples 1 to 8 where adhesion-facilitating treatment was carried out, an anchor failure did not result in each adhesion-facilitating treatment, and a stable peel strength of about 0.1 N/25 mm was obtained. This means that the adhesive laminate is weakly adhesive and is easy to be peeled, and is excellent in removability. Further, transparency after bonding was also good. Further, the adhesive laminate was bonded again after the above peeling test, and it exhibited a good adhesion without leaving bubbles on the bonded surface.

**TABLE 3**

| | | Ex.11 | Ex. 12 | Ex. 13 | Ex. 14 | Ex. 15 |
|---|---|---|---|---|---|---|
| Adhesion-facilitating treatment | | Corona discharge treatment | Primer 1 MP-2000 | Primer 2 CORONATEL | Primer 3 P301-75E | Primer 4 KBM-603 |
| Peel strength | After 30 minutes | 0.09 | 0.12 | 0.13 | 0.09 | 0.12 |
| | After 24 hours | 0.10 | 0.11 | 0.14 | 0.13 | 0.12 |
| | After 72 hours | 0.09 | 0.10 | 0.12 | 0.12 | 0.12 |
| | After 168 hours | 0.11 | 0.12 | 0.12 | 0.13 | 0.13 |
| Stainless steel plate peel adhesive strength | | 0.10 | 0.11 | 0.13 | 0.11 | 0.11 |

**TABLE 4**

| | | Ex. 16 | Ex.17 | Ex.18 | Comp. Ex. 11 |
|---|---|---|---|---|---|
| Adhesion-facilitating treatment | | Primer 5 TP-235 | Primer 6 No.40 | Primer 7 8UA-347 | Untreated |
| Peel strength | After 30 minutes | 0.11 | 0.11 | 0.10 | S |
| | After 24 hours | 0.12 | 0.11 | 0.10 | S |
| | After 72 hours | 0.12 | 0.12 | 0.09 | S |
| | After 168 hours | 0.12 | 0.11 | 0.11 | S |
| Stainless steel plate peel adhesive strength | | 0.11 | 0.11 | 0.11 | 0.11 |

Tables 3 and 4 show that in Comparative Example 11 where the substrate is not subjected to adhesion-facilitating treatment, an anchor failure and an adhesive deposit resulted. By contrast, in Examples 11 to 18 where adhesion-facilitating treatment was carried out, an anchor failure did not result in each adhesion-facilitating treatment, and a stable peel strength of about 0.1 N/25 mm was obtained. This means that the adhesive laminate is weakly adhesive and is easy to be peeled, and is excellent in removability. Further, transparency after bonding was also good. Further, the adhesive laminate was bonded again after the above peeling test, and it exhibited a good adhesion without leaving bubbles on the bonded surface.

**TABLE 5**

| | | Ex.21 | Ex.22 | Ex.23 | Ex.24 | Ex.25 |
|---|---|---|---|---|---|---|
| Adhesion-facilitating treatment | | Corona discharge treatment | Primer 1 MP-2000 | Primer 2 CORONATEL | Primer 3 P301-75E | Primer 4 KBM-603 |
| Peel strength | After 30 minutes | 0.19 | 0.24 | 0.28 | 0.24 | 0.22 |
| | After 24 hours | 0.20 | 0.25 | 0.29 | 0.26 | 0.21 |
| | After 72 hours | 0.21 | 0.22 | 0.32 | 0.25 | 0.25 |
| | After 168 hours | 0.21 | 0.26 | 0.34 | 0.28 | 0.24 |
| Stainless steel plate peel adhesive strength | | 0.20 | 0.24 | 0.30 | 0.25 | 0.23 |

**TABLE 6**

| | | Ex. 26 | Ex.27 | Ex.28 | Comp. Ex. 21 |
|---|---|---|---|---|---|
| Adhesion-facilitating treatment | | Primer 5 TP-235 | Primer 6 No.40 | Primer 7 8UA-347 | Untreated |
| Peel strength | After 30 minutes | 0.22 | 0.21 | 0.22 | S |
| | After 24 hours | 0.23 | 0.21 | 0.23 | S |
| | After 72 hours | 0.23 | 0.21 | 0.21 | S |
| | After 168 hours | 0.24 | 0.22 | 0.24 | S |
| Stainless steel plate peel adhesive strength | | 0.24 | 0.23 | 0.24 | 0.22 |

Tables 5 and 6 show that in Comparative Example 21 where the substrate is not subjected to adhesion-facilitating treatment, an anchor failure and an adhesive deposit resulted. By contrast, in Examples 21 to 28 where adhesion-facilitating treatment was carried out, an anchor failure did not result in each adhesion-facilitating treatment, and a stable peel strength of about 0.2 to 0.3 N/25 mm was obtained. This means that the adhesive laminate is weakly adhesive and is easy to be peeled, and is excellent in removability.

Further, transparency after bonding was also good. Further, the adhesive laminate was bonded again after the above peeling test, and it exhibited a good adhesion without leaving bubbles on the bonded surface.

Peel electrostatic charge, surface resistance and volume specific resistance of the pressure sensitive adhesive sheets obtained in Examples 1, 11 and 21 were evaluated by the following methods. The results are shown in Table 7.

### [PEEL ELECTROSTATIC CHARGE]

On a glass plate washed with methyl ethyl ketone and dried, an adhesive laminate was bonded at room temperature and press-bonded by a rubber roll of 2 kg. 30 minutes later, the pressure sensitive adhesive sheet was peeled under conditions of 180° peel and a tension speed of 30 m/min by means of a high speed peeling tester (product name: TE-701 model, manufactured by Tester Sangyo Co., Ltd.). On the surface of the adhesive laminate immediately after peeling, a static electricity measuring apparatus (static electricity measuring apparatus KSD-0103, manufactured by Kasuga Electric Works Ltd.) was set, and the electrostatic charge (unit: V) was measured.

### [SURFACE RESISTANCE]

The surface resistance (unit: Ω) was measured by using the adhesive surface of an adhesive laminate. The measurement was carried out by using a high resistivity meter (HIRESTA-UP (MCP-HT450), manufactured by Mitsubishi Chemical Corporation) in a surface resistance mode at room temperature of 23°C under a relative humidity of 65%. The smaller the value, the more difficult the static electrification.

### [VOLUME SPECIFIC RESISTANCE]

The volume specific resistance (unit: Ω) was measured by using the adhesive surface of an adhesive laminate. The measurement was carried out by using the above high resistivity meter in a volume specific resistance mode at room temperature of 23°C under a relative humidity of 65%. The smaller the value, the more difficult the static electrification.

**TABLE 7**

| Adhesive laminate | Ex. 1 | Ex. 11 | Ex. 21 |
|---|---|---|---|
| Peel electrostatic charge (V) | 200 | 100 | 200 |
| Surface resistance (Ω) | 6×10¹² | 4×10¹¹ | 8×10¹² |
| Volume specific resistance (Ω) | 2.4×10⁹ | 60×10⁸ | 2.5×10⁹ |

Table 7 shows that surface resistance was a low value of from 10¹¹ to 10¹² Ω. Particularly, the polymer (S1-2) having an oxyethylene group in Example 11 had a very low surface resistance of 4×10¹¹ Ω.

### EXAMPLES 31 to 35

Each of primer 1 (Example 31), primer 2 (Example 32), primer 5 (Example 33), primer 6 (Example 34) and primer 7 (Example 35) was applied to a 25 µm-thick PET film not subjected to surface treatment, and then drying property, transparency and methanol resistance immediately after drying, of the primer were evaluated by the following methods. The application thickness of the primer layer was adjusted to be about 10 µm. The results are shown in Table 8.

### [DRYING PROPERTY]

A PET film having a primer applied was heated in an oven where the temperature was maintained at 110°C. After 1 minute, the PET film was taken out from the oven, and was cooled to room temperature. Degree of tack was evaluated by touching the surface on which the primer was applied with a finger.
○ (good): The surface was not tacky, and the surface after touch with a finger was smooth.
Δ (slightly good): The surface was a little tacky, and a slight fingerprint was observed on the surface after the touch with a finger.
× (no good): The surface was tacky, and a fingerprint was clearly observed on the surface after the touch with a finger.

### [TRANSPARENCY]

A PET film having a primer applied was heated at 110°C for 1 minute, followed by cooling to room temperature (the PET film was left at room temperature for 10 minutes). And then the transparency of the PET film was visually evaluated.
○ (good): The PET film was transparent and no turbidity was observed.
Δ. (slightly good): The PET film was nearly transparent, but turbidity was partially and slightly observed.
× (no good): A clearly turbid part was observed.

### [METHANOL RESISTANCE IMMEDIATELY AFTER DRYING]

A PET film having a primer applied was heated at 110°C for 1 minute, followed by cooling to room temperature (the PET film was left at room temperature for 10 minutes), and was immersed in methanol for 1 minute. Appearance of the primer layer in wet condition with methanol was visually evaluated.
○ (good): No peeling or dulling was observed in the primer layer, and the primer layer was transparent.
Δ. (slightly good): A slight peeling was observed, or a slight dulling was partially observed, in the primer layer.
× (no good): A clear peeling was observed, or a clear turbid part was observed, in the primer layer.

**TABLE 8**

| | Ex.31 | Ex.32 | Ex.33 | Ex.34 | Ex.35 |
|---|---|---|---|---|---|
| Adhesion-facilitating treatment | Primer 1 MP-2000 | Primer 2 CORONATEL | Primer 5 TP-235 | Primer 6 No.40 | PRIMER 7 8UA-347 |
| Drying property | Δ | Δ | ○ | ○ | ○ |
| Transparency | ○ | ○ | ○ | ○ | ○ |
| Methanol resistance | Δ | Δ | ○ | ○ | ○ |

As shown in Table 8, each one in Examples 31 to 35 was good in transparency. Particularly, Example 33 using a polyester resin-type primer 5, Examples 34 using a synthetic rubber-type primer 6 and Example 35 using an acrylurethane carbonate resin primer 7 were more excellent in drying property and methanol resistance than a urethane-type primer or an isocyanate-type primer.

### INDUSTRIAL APPLICABILITY

The adhesive laminate of the present invention comprising a polyester-type substrate layer and an adherence substance layer has a relatively low adhesive strength, is excellent in removability, and is thereby suitably used as various types of protective sheets. Further, it is an adhesive laminate of which resulting adhesive deposit is suppressed and it does not require a release agent treatment, whereby silicone contamination will not occur, for example. Therefore, it is applicable to electronic hardwares such as semiconductor devices and liquid crystal substrates.

The entire disclosures of Japanese Patent Application No. 2008-261780 filed on October 8, 2008 and Japanese Patent Application No. 2009-057005 filed on March 10, 2009 including specifications, claims and summaries are incorporated herein by reference in their entireties.

## Claims

1. An adhesive laminate comprising a polyester-type substrate layer and an adherence substance layer, wherein one side of the polyester-type substrate layer is a treated surface subjected to adhesion-facilitating treatment, the adherence substance layer is in contact with the treated surface, and the adherence substance layer is a layer obtained by curing a curable composition containing the following silyl group-containing polymer (S):
Silyl group-containing polymer (S): a silyl group-containing polymer having a polyether chain, a polyester chain and/or a polycarbonate chain in its main chain and having a hydrolyzable silyl group at its molecular terminal.

2. The adhesive laminate according to Claim 1, wherein the silyl group-containing polymer (S) is a silyl group-containing polymer (S1) obtained by introducing a hydrolyzable silyl group to a terminal of at least one polyol compound selected from the group consisting of a polyether polyol, a polyester polyol, a polycarbonate polyol and a polyether polyester polyol.

3. The adhesive laminate according to Claim 1, wherein the silyl group-containing polymer (S) is a silyl group-containing polymer (S2) obtained by introducing a hydrolyzable silyl group to a terminal of a polyurethane prepolymer obtained by reacting at least one polyol compound selected from the group consisting of a polyether polyol, a polyester polyol, a polycarbonate polyol and a polyether polyester polyol with a polyisocyanate compound.

4. The adhesive laminate according to Claim 1, wherein the silyl group-containing polymer (S) is a silyl group-containing polymer (S3) obtained by introducing a hydrolyzable silyl group to a molecular terminal of a polyurethane polymer obtained by reacting at least one polyol compound selected from the group consisting of a polyether polyol, a polyester polyol, a polycarbonate polyol and a polyether polyester polyol with a polyisocyanate compound to obtain a polyurethane prepolymer, and further subjecting the polyurethane prepolymer to a chain-extending reaction by using a chain extending agent.

5. The adhesive laminate according to any one of Claims 1 to 4, wherein the hydrolyzable silyl group of the silyl group-containing polymer (S) is introduced by using at least one silane compound selected from the group consisting of an isocyanate silane, an aminosilane, a mercaptosilane, an epoxysilane and a hydrosilane.

6. The adhesive laminate according to any one of Claims 1 to 5, wherein the hydrolyzable silyl group is a trialkoxysilyl group.

7. The adhesive laminate according to any one of Claims 1 to 6, which has a peel adhesive strength of at most 8 N/25mm.

8. The adhesive laminate according to any one of Claims 1 to 7, wherein the other side of the polyester-type substrate layer is an untreated substrate surface which is not subjected to adhesion-facilitating treatment.

9. The adhesive laminate according to any one of Claims 1 to 8, wherein the adhesion-facilitating treatment is a single treatment or a combination of two or more treatments selected from the group consisting of plasma treatment, corona discharge treatment, flame treatment, ultraviolet ray treatment, primer treatment and blast treatment.
